# EUROPEAN PATENT APPLICATION

(11) **EP 1 995 570 A1**
(43) Date of publication of application: **26.11.2008**
(21) Application number: 08104063.6
(22) Date of filing: 22.05.2008
(51) Int. Cl.: G01F 1/66

(54) **An ultrasound flow meter**

(30) Priority: 25.05.2007 EP 07010417
(71) Applicant: KAMSTRUP A/S, 8660 Skanderborg (DK)
(72) Inventor: Borring, Peter Nordlund, 7100, Vejle (DK)
(74) Representative: Plougmann & Vingtoft A/S

(57) **Abstract**

The present invention discloses an ultrasound flow meter (102) for ultrasonic measurement of fluid flow comprising a measurement channel (202) having a cross-section (402), two or more ultrasound reflectors (204) for measurement of fluid flow within the measurement channel (202), holding means (206) for holding the two or more ultrasound reflectors in a fixed relation to the measurement channel (202). In order e.g. to improve precision and consistency of measuring results there is among others provided a single measurement channel forming element (212, 604) having a length (209), and a part (302) of the holding means (206) extending at least partly along the length (209) outside the cross-section (402), whereby any cross-section (402), at least along a section (208) of the length (209), is only delimited by an undivided inner surface (210) of the single measurement channel forming element (212).

## Description

### FIELD OF THE INVENTION

The invention relates to an ultrasound flow meter for ultrasonic measurement of fluid flow.

### BACKGROUND OF THE INVENTION

Ultrasound flow meters for ultrasonic measurement of fluid flow are e.g. used for measuring the flow of gases and liquids, and in particular liquids such as water.

In some applications the amount of fluid flow measured by the flow meter is used to charge a customer using the fluid. In these and also in other applications the accuracy and consistency of the measuring results needs to be optimal and in most applications among others needs to be certified for their accuracy and consistency. These needs must be fulfilled while also considering factors such as the production and assembling cost of the flow meter.

Flow meters known to the present inventor fail to some extent to provide one or more of these needs possibly while also considering one or more of the described or other factors. The inventor of the present invention has therefore appreciated that an improved ultrasound flow meter is of benefit, and has in consequence devised the present invention.

### SUMMARY OF THE INVENTION

It may be seen as an object of the present invention to provide an improved flow meter for ultrasonic measurement of fluid flow. Preferably, the invention alleviates, mitigates or eliminates one or more of the above or other disadvantages singly or in any combination.

The present invention provides this in accordance with the present main claim.

By providing the single measurement channel forming element and by providing holding means extending at least partly along the length of the measurement channel forming element and by providing one or more parts of the holding means arranged in a structural way so as to provide holding means positioned outside of any cross-section of the single measurement channel forming element, at least for any cross-sections provided along a section of the length of the single measurement channel forming element, an obtainable advantage may be seen as to improve the accuracy and consistency of a measurement of fluid flow with the flow meter. As an example this improvement may be provided due to the holding means hereby being coupled to the single measurement channel forming element along at least a section of the length and hereby in an improved fixed relation to the single measurement channel forming element while not influencing a flow of fluid in the measurement channel along this section. Alternatively or additionally, by providing a cross-section of the measurement channel which - at least along a section of the length - is only delimited by the single measurement channel forming element, a possible advantage is that precision and consistency of the flow characteristics within the measurement channel is provided.

When at least one ultrasound reflector and the holding means are provided as a monolithic unit and when any cross-section of the measurement channel, at least along the section of the length, is only delimited by an undivided inner surface of the single measurement channel forming element, a possible advantage is that a further improvement of the accuracy and consistency of a measurement of fluid flow with the flow meter is provided. This may among others be due to non existing assembly tolerances between the reflector and the holding means while the inner surface of the single channel forming element is still also prevented from being divided. A single channel forming element with an inner surface which is undivided, at least in the described section, provides a flow of fluid which is increasingly more consistent from flow meter to flow meter and potentially undisturbed by assembly tolerances.

When the inner surface is substantially smooth, a possible advantage may be that areas of the inner surface where settlements of any substances which may alter the flow within the measurement channel are prevented. In accordance herewith the inner surface may be formed with a substantially circular cross-section, and the single measurement channel forming element may be formed by an annular element. The cross-section of inner surface may be provided with anyone of the following surfaces such as an oval, an elliptical, a polygon shaped or otherwise shaped but preferably such that any abrupt curves or bends in the cross-section of the inner surface are prevented.

When the two or more ultrasound reflectors and the holding means are provided as one monolithic reflector unit, a possible advantage may be that this may lower a number of production and assembling tolerances between the position and/or the direction of the reflectors. In accordance herewith, when the monolithic reflector unit is directly connectable to the single measurement channel forming element, a possible advantage may be to prevent any tolerances in thickness or the like of intermediate elements which are hereby possibly not present.

When the flow meter further comprises a housing with a flow inlet and a flow outlet, and the monolithic reflector unit and the single measurement channel forming element are formed so as to be insertable into the housing by an insertion from the flow inlet or the flow outlet, a way of assembling the flow meter is provided. When the monolithic reflector unit and the single measurement channel forming element are connectable prior to the insertion, a possible advantage may be that a unit of a predetermined and stable form is provided for insertion into the housing.

When each of the two or more ultrasound reflectors with holding means are provided as two separate units, a possible advantage may be that transferral of ultrasound waves through the holding means may be prevented. When the one or more holding arms are connectable with the single measurement channel forming element, a possible advantage may be that a unit of a predetermined and stable form is provided for insertion into the housing. In accordance herewith, the one or more arms are possibly insertable into the single measurement channel forming element into one of the following group of structural parts of the annular element; a groove extending substantially in a flow direction, a hole extending substantially in the flow direction, a through going hole extending substantially in the flow direction.

When the flow meter further comprises a housing with a flow inlet and a flow outlet, and the one or more holding arms and the single measurement channel forming element are formed so as to be insertable into the housing by an insertion from the flow inlet or the flow outlet, a possible advantage may be that a way of assembling the flow meter is provided.

When the section of the length where the inner surface is only delimited by the single measurement channel forming element is a section of the length where a circumferential length of the inner surface is substantially unchanged, a possible advantage may be that in this section a uniform and consistent flow characteristic is provided. In accordance herewith, the section of the length can be at least 25% or at least 50% or at least 75% or at least 90% and possibly even the full length of the single measurement channel forming element.

When the holding means and the single measurement channel forming element are provided in two separate parts prior to connection of these parts, a possible advantage may be that these parts may be provided from different materials.

When the single measurement channel forming element at least along the section of the length is provided as one monolithic piece, a possible advantage may be that any junctions in the flow direction and/or perpendicular hereto of the measurement channel is provided in the measurement channel forming element and hereby possibly less changes and/or inaccuracies in the flow characteristics may occur.

In general by writing that 'it is an advantage' by the present invention and referring to an advantage, it must be understood that this advantage may be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments in accordance with the invention will be described, by way of example only, with reference to the drawings, in which
FIG. 1 shows a perspective of an isometric overview of an ultrasound flow meter,
FIG. 2 shows a cross-sectional view along line A-A in FIG. 1,
FIG. 3 shows a cross-sectional view along line B-B in FIG. 1,
FIG. 4 shows a cross-section along line C-C in FIG. 1,
FIG. 5 shows a single measurement channel forming element and two reflector/holding means units,
FIG. 6 shows a single measurement channel forming element and a monolithic reflector unit
FIG. 7 shows a single measurement channel forming element and a monolithic reflector unit

### DESCRIPTION OF EMBODIMENTS

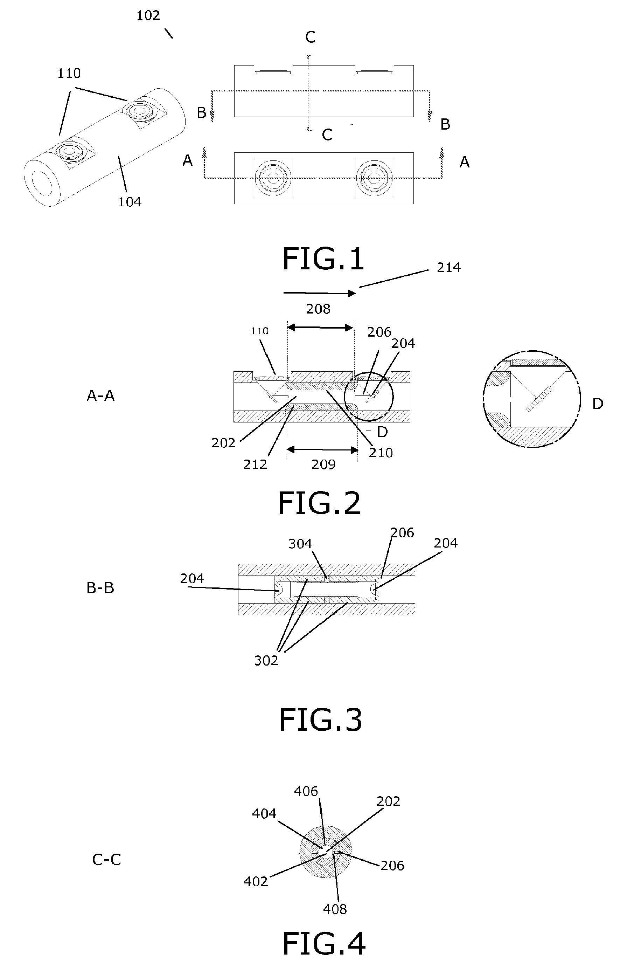

An embodiment of the invention is illustrated in FIG 1, which for the sake simplicity shows an ultrasound flow meter 102 in a schematic way. The flow meter 102 is shown in a perspective view, in a side view, and in a top view. Two ultrasound transducers 110 are positioned and acoustically coupled to a housing 104 for ultrasonic measurement of fluid flow from a flow inlet 106 to a flow outlet 108 positioned in opposite ends of the housing 104.

The measurement of fluid flow may follow from generating and receiving ultrasonic signals by each of the ultrasound transducers as described in the following. The ultrasonic signals are directed towards and reflected by ultrasound reflectors within the housing. In a typical measurement of fluid flow, the ultrasonic signals are simultaneously emitted from the two ultrasound transducers. Signals propagating upstream propagate faster than signals propagating downstream, and the flow rate can be determined by measuring difference in arrival time of the emitted signals at the other transducer. The determination of the flow rate, as well as outputting the flow rate may be done by an analogue or digital unit electrically connected to the transducers.

The housing comprises coupling means for coupling the housing with a pipe system. The coupling means and the pipe system are not shown. A line indicating a cross-sectional view of the flow meter along a centre of the top view is shown with A-A. A line indicating a cross-sectional view of the flow meter along a centre of the side view is shown with B-B. A line indicating a cross-section of the flow meter in a position between the transducers of the side view is shown with C-C.

When referring in particular to FIG. 2 but also to other figures it can be seen that FIG. 2 shows the cross-sectional view of the flow meter along the centre of the top view shown in FIG. 1. A flow direction 214 of a fluid flow within the flow meter is indicated from left to right in the figure. Furthermore, FIG. 2 shows a measurement channel 202 and two ultrasound reflectors 204 positioned within the housing 104. The ultrasound reflectors are provided with holding means 206 coupled to and extending from the reflectors and provided for holding the two or more ultrasound reflectors in a fixed relation to the measurement channel 202. The fixed relation is assured by the holding means extending in the flow direction at least partly along the length 209 of a single measurement channel forming element 212 and by the holding means being coupled to the single measurement channel forming element 212. The coupling is provided along a centre of the single measuring channel forming element 212.

It follows from the figure that along a section 208 of the length 209 of the single measurement channel forming element 212, the holding means 206 are not seen in this sectional view. This is due to the holding means 206 not being part of a delimitation of the measurement channel 202 in the section.

The delimitation in this section is only formed by an inner surface 210 of the single measurement channel forming element 212 shown in the figure. This is due to a part 302, shown in FIG. 3, of the holding means extends along the length 209 of the single measurement channel forming element 212, but the part 302 is positioned outside a cross-section 402, shown in FIG. 4, of the measurement channel 202. Thus, the cross-section 404 of the measurement channel 202 is at least along the section 208 only delimited by the single measurement channel forming element 212. Any cross-section in the section 208 will show that the inner surface 210 is undivided. The inner surface is undivided by the holding means and the single measurement channel forming element 212 also being undivided, i.e. is not formed from two or more separate parts.
By providing the single measurement channel forming element 212 and by providing holding means 206 extending at least partly along the length of the measurement channel forming element 212 and by providing one or more parts of the holding means and the measurement channel arranged in the structural way as described so as to provide holding means positioned outside the cross-section of the single measurement channel forming element 212, an obtainable advantage may be seen as to improve the accuracy and consistency of a measurement of fluid flow with the flow meter.

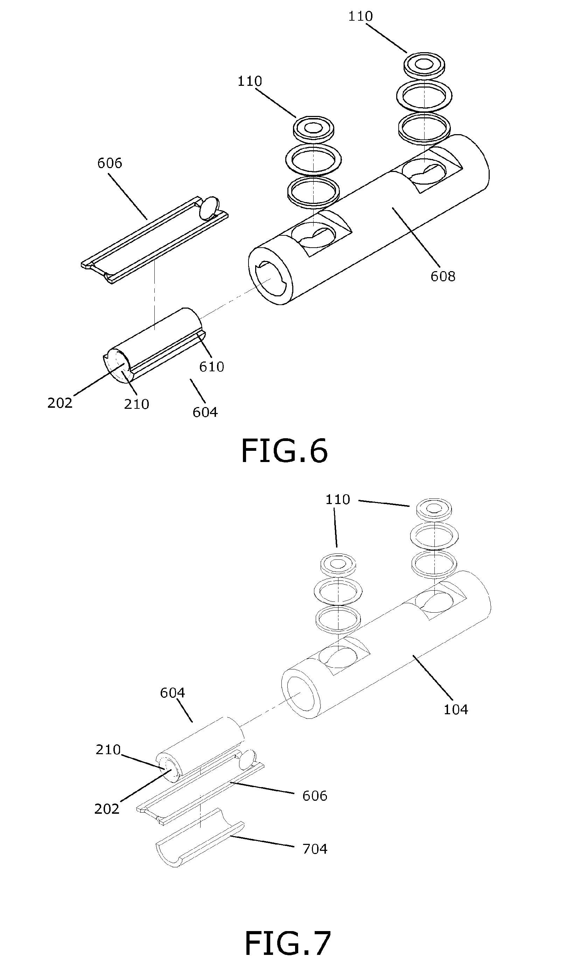

FIG. 3 shows the cross-sectional view of the flow meter along the centre of the side view shown in FIG. 1. In FIG. 3 it can be seen that each of the reflectors 204 with holding means 206 are provided as two separate units. It follows from the figure, possibly seen and understood in connection with FIGS 6 and 7, that one ultrasound reflector 204 and the holding means 206 are provided as a monolithic unit. Herein it is preferably understood that a monolithic unit is a unit, preferably made from a single material, which is one unit before, during and after any manufacturing step. Herein the single material is preferably a metal such as steel. In the shown embodiment, the holding means of the reflectors, i.e. the reflectors arms, do not directly touch each other in an area 304 in the middle of the single channel forming element. This area may be positioned elsewhere along the length, and may be shorter or longer. The holding means may even touch each other. The holding means 206, i.e. the two holding arms, and one reflector 204 are in this embodiment made from stamping out a single monolithic metal part and by twisting the reflector to a certain angle relative to the holding means.

FIG. 4 shows the cross-section along line C-C in FIG. 1. It follows that the holding means 206 are positioned outside the cross-section 402 of the measurement channel 202 in that there is a thickness of material 408 of the single measurement channel forming element 212 between the measurement channel 202 and the holding means 206, i.e. the holding means 206 is in this cross-section positioned outside the cross-section 402 of the measurement channel 202.

It can be seen that the cross-section of the inner surface of the single channel forming element 212 is circular 406 and therefore also smooth 404 in that it has a constant radius from a centre of the single measurement channel forming element 212 and to the inner surface 210 of the single measurement channel forming element 212.

The cross-section of inner surface may be provided with anyone of the following surfaces such as an oval, an elliptical, a polygon shaped or other shapes, but preferably such that any abrupt curves or bends in the cross-section of the inner surface 210 are prevented.

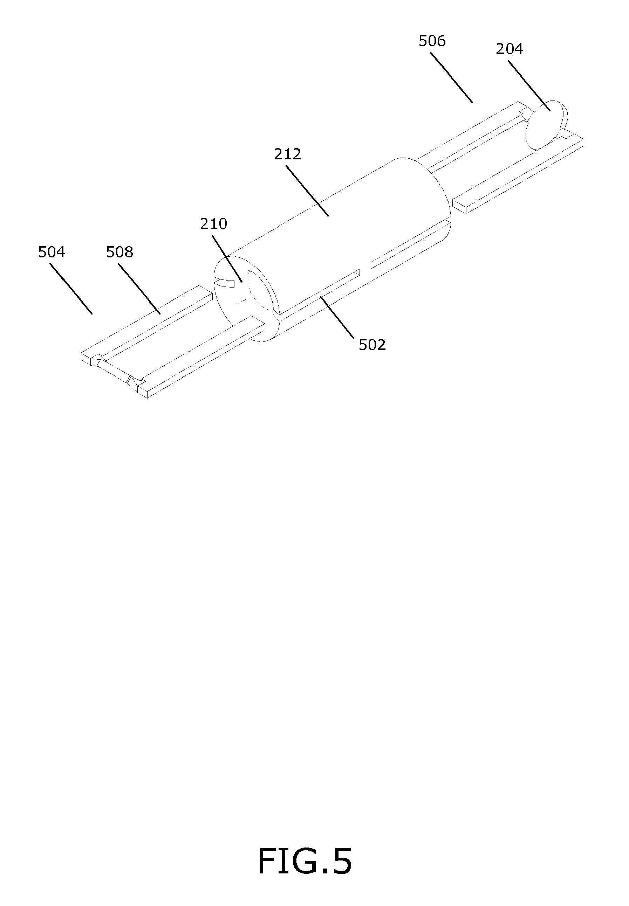

FIG. 5 shows the two separate reflector units 504 and 506 and the single measurement channel forming element 212 of FIG. 1-4. FIG. 5 shows the two separate reflector units 504 and 506 prior to insertion of the holding arms 508 into grooves 502 in the single measurement channel forming element 212 and prior to insertion of the single measurement channel forming element 212 with the reflector units into the housing 104. The insertion is provided from the flow inlet or the flow outlet of the housing 104.

FIG. 6 shows an embodiment of the flow meter where a single measurement channel forming element 604 is provided with an outer surface form 610 which is suited for coupling with a monolithic reflector unit 606. Furthermore the figure shows that the reflector unit and the single measurement channel forming element 604 is formed for insertion of these two parts into the housing 608. The monolithic reflector unit includes two reflectors and holding means. The holding means 206 and the two reflectors 204 are in this embodiment made from stamping out a single monolithic metal part and by twisting the reflectors to a certain angle relative to each other and to the holding means.

It can be seen from the figure that the form of the reflector unit 606 and the single measurement channel forming element 604 along with a connection or coupling of the monolithic reflector unit 606 and the single measurement channel forming element 604 is provided so as to position a centre of the reflectors substantially along a centre line in a centre of the measurement channel provided in the single measurement channel forming element. Specifically it follows that both the channel forming element as well as the reflector unit are each provided in one single element allowing for only two parts to be assembled prior to insertion into the housing while still preventing the measurement channel forming element from being provided with any joints - at least along a section of the measurement channel forming element. This also applies for the other embodiments described.

Furthermore it follows from the figure that an outer surface form 610 of the single channel forming element and/or a form of the reflector unit is provided so as to fit within the housing 608 in order to prevent any rotation of the channel forming element and the reflector unit within the housing relative to the position of the transducers. Figures 6 and 7 schematically show the ultrasound transducers 110 with further elements for acoustically coupling the ultrasound transducers to the housing 608 and 104 and making the coupling fluid tight.

Still further, but not seen in the figures, the form of the measurement channel forming element and/or the reflector unit and/or the housing may be provided so as to lock the reflector and/or the channel forming element within the housing in the direction of the length of the measurement channel.

FIG. 7 shows a further embodiment where a fitting element 704 is provided on top of the single reflector unit 606 in order for the single measurement channel forming element 604 and the reflector unit after connection with each other as indicated with the thin lines, to provide an assembled unit fitted for insertion into the housing 104.

In general for the above described figures, a connection between the single measurement channel forming element and the holding means of the reflectors could be provided by a press fit or by means such as pins and holes.

From the cross-sections in figures 2-4 and from the figures 5-7 it follows that in the complete length 209 of the single element 212, 604 forming the measurement channel, the single element 212,604, and hereby the inner surface 210, is undivided in both a direction parallel with the flow direction as well as in a direction perpendicular to the flow direction. Furthermore it follows that the single element 212, 604 forming the measurement channel (the single measurement channel forming element), is provided as one single part. The one single part is in the embodiments provided as one monolithic piece (212, 604).

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims, however the inclusion of the reference signs is only for clarity reasons and should not be construed as limiting the scope of the claims.

In this document there is disclosed an ultrasound flow meter 102 for ultrasonic measurement of fluid flow comprising a measurement channel 202 having a cross-section 402, two or more ultrasound reflectors 204 for measurement of fluid flow within the measurement channel 202, holding means 206 for holding the two or more ultrasound reflectors in a fixed relation to the measurement channel 202. In order e.g. to improve precision and consistency of measuring results there is among others provided a single measurement channel forming element 212, 604 having a length 209, and a part 302 of the holding means 206 extending at least partly along the length 209 outside the cross-section 402, whereby the cross-section 402 is at least along a section 208 of the length 209 only delimited by an inner surface 210 of the single measurement channel forming element 212. It also follows, e.g. from the figures, that the inner surface 210 is undivided, at least along a section 208 of the length 209.

## Claims

1. An ultrasound flow meter (102) for ultrasonic measurement of fluid flow, the flow meter (102) comprising
- a measurement channel (202) having a cross-section (402),
- two or more ultrasound reflectors (204) for measurement of fluid flow within the measurement channel (202), wherein
- the measurement channel (202) is at least partly formed by a single measurement channel forming element (212, 604), the single measurement channel forming element (212, 604) having a length (209), and
- the two or more ultrasound reflectors comprises holding means (206) for holding the two or more ultrasound reflectors (204) in a fixed relation to the single measurement channel forming element (212, 604), and
- at least one ultrasound reflector (204) and the holding means (206) are provided as a monolithic unit, and
- a part (302) of the holding means (206) is provided at least partly along said length (209) outside said cross-section (402), whereby
- any cross-section (402) of the measurement channel (202) is, at least along a section (208) of said length (209), only delimited by an undivided inner surface (210) of the single measurement channel forming element (212).

2. An ultrasound flow meter according to claim 1, wherein the inner surface (210) is substantially smooth (404).

3. An ultrasound flow meter according to any of the preceding claims, wherein the inner surface (210) is formed with a substantially circular (406) cross-section (402).

4. An ultrasound flow meter according to any of the preceding claims, wherein the single measurement channel forming element (212, 604) is formed by an annular element (212, 604).

5. An ultrasound flow meter according to any of the preceding claims, wherein the two or more ultrasound reflectors (204) and the holding means (206) are provided as one monolithic reflector unit (606).

6. An ultrasound flow meter according to claim 5, wherein the monolithic reflector unit (606) is directly connectable to the single measurement channel forming element (604).

7. An ultrasound flow meter according to claim 5 or 6, wherein the flow meter further comprises a housing (608, 104) with a flow inlet and a flow outlet, and wherein the monolithic reflector unit (606) and the single measurement channel forming element (604) are formed so as to be insertable into the housing (608, 104) by an insertion from the flow inlet (106) or the flow outlet (108).

8. An ultrasound flow meter according to claim 7, wherein the monolithic reflector unit (606) and the single measurement channel forming element (604) are connectable prior to the insertion.

9. An ultrasound flow meter according to any of the claims 1 to 4, wherein each of the two or more ultrasound reflectors (204) with holding means (206) are provided as two separate units (504, 506).

10. An ultrasound flow meter according to claim 9, wherein each of the two separate units (504, 506) comprises one or more reflectors (204) and one or more holding arms (508).

11. An ultrasound flow meter according to claim 10, wherein the one or more holding arms (508) are connectable with the single measurement channel forming element (212, 604).

12. An ultrasound flow meter according to claim 10 or 11, wherein the one or more arms (508) are insertable into the single measurement channel forming element (212, 604) into one of the following group of structural parts of the annular element; a groove (502) extending substantially in a flow direction, a hole extending substantially in the flow direction, a through going hole extending substantially in the flow direction.

13. An ultrasound flow meter according to claim 11 or 12, wherein the flow meter further comprises a housing (104, 608) with a flow inlet and a flow outlet, and wherein the one or more holding arms (502) and the single measurement channel forming element (212) are formed so as to be insertable into the housing (104, 604) by an insertion from the flow inlet or the flow outlet.

14. An ultrasound flow meter according to any of the preceding claims, wherein the section (208) of the length (209) where the inner surface (210) is only delimited by the single measurement channel forming element (212, 604) is a section (208) of the length (209) where a circumferential length of the inner surface (210) is substantially unchanged.

15. An ultrasound flow meter according to any of the preceding claims, wherein the holding means (206) and the single measurement channel forming element (212, 604) are provided in two separate parts (206) (212,604) prior to connection of these parts.

16. An ultrasound flow meter according to any of the preceding claims, wherein the single measurement channel forming element (212, 604) at least along the section (208) of the length (209) is provided as one monolithic piece (212, 604).
